# EUROPÄISCHE PATENTANMELDUNG

(11) **EP 1 095 842 A2**
(43) Veröffentlichungstag der Anmeldung: **02.05.2001**
(21) Anmeldenummer: 00120107.8
(22) Anmeldetag: 19.09.2000
(51) Int. Cl.: B62D 21/15

(54) **Crashzugband zum Schutz der Fahrgastzelle eines Fahrzeugs**

(30) Priorität: 30.10.1999 DE 19952536
(71) Anmelder: Volkswagen Aktiengesellschaft, 38436 Wolfsburg (DE)
(72) Erfinder: Morsch, Klaus-Dieter, 38112 Braunschweig (DE)

(57) **Zusammenfassung**

Die Erfindung betrifft die Anordnung eines Crashzugbandes an den Längsträgern eines Fahrzeugs zum Schutz der Fahrgastzelle bei einem versetzten Frontalaufprall, wobei die Längsträger mit einer deformierbaren Karosseriestruktur verbunden sind, bei der wenigstens am Längsträger der häufiger bei dem Frontalaufprall betroffenen Seite des Fahrzeugs ein Crashzugband befestigt ist. Sie löst die Aufgabe, die Crashzugbandanordnung so zu gestalten, daß mit dieser auf einfache Weise eine Deformation der Fahrgastzelle, insbesondere im Bereich des Fußraumes, bei einem versetzten Frontalaufprall reduziert wird. Dazu ist das Crashzugband (1, 6, 9) am jeweils gegenüberliegenden Längsträger (3) und in Fahrzeuglängsrichtung erheblich vor der am Längsträger (2) der betroffenen Seite gegebenen Befestigungsstelle (A) bei (B) gehaltert.

## Beschreibung

Die Erfindung betrifft die Anordnung eines Crashzugbandes (Zugbandes) an den Längsträgern eines Fahrzeugs zum Schutz der Fahrgastzelle bei einem versetzten Frontalaufprall.

Ein Großteil von Fahrzeug-Frontalaufprallen im realen Unfallgeschehen sind versetzte Frontalaufpralle, sog. Offset-crashs. Bei diesen ist die Gefahr einer Beschädigung der Fahrgastzelle und damit einer Verletzung der Fahrzeuginsassen, insbesondere des Fahrzeuginsassen auf der stärker deformierten Fahrzeugseite und dort im Faußraumbereich, größer als bei einem Frontalaufprall des Fahrzeugs mit der gesamten Fahrzeugbreite. Dabei muß die Deformationsenergie zum größten Teil von der betroffenen Vorderwagenstruktur absorbeirt werden.

Um die Deformation der Vorderwagenstruktur zu verringern, ist es bereits vorgeschlagen worden (DE 37 10 808 A1), das aus einer Verbrennungskraftmaschine und einem entgegen der Fahrtrichtung angeordneten Getriebe bestehende Antriebsaggregat durch wenigstens ein Zugseil mit der deformierbaren und zwei Längsträger aufweisenden Vorderwagenstruktur zu verbinden. Das Zugseil ist seitlich neben dem Motor an einem Längsträger angeordnet und mindestens über einen Teil seiner Länge als flexibles Zugseil ausgebildet und permanent mit dem Motor verbunden. Bei einem Aufprall wird das Zugseil mit der deformierbaren Vorderwagenstrukur in Fahrzeuglängsrichtung entgegen der Fahrtrichtung verschoben, stützt sich nach einer Teilverformung am Antriebsaggregat ab und wird im weiteren Verlauf schließlich energieabsorbierend gespannt. Dabei wird das Antriebsaggregat jedoch einseitig belastet und kann sich um eine vertikale Achse verdrehen und kann quer zum Mitteltunnel in den Fußraum an der crashabgewandten Seite verlagert werden.

Um den verfügbaren Verformungsweg der Vorderwagenstruktur zu vergrößern und die Innenraumverzögerungswerte zu senken, hat man vorgeschlagen (DE 43 13 785 A1), als Kraftübertragungsmittel in einem seitlichen Bereich des Antriebsaggregates wenigstens ein steifes Aufprallelement und am seitlich diesem zugewandten Längsträger ein mit diesem korrespondierendes steifes Aufprallelement anzuordnen, die bei einem versetzten Frontalaufprall formschlüssig ineinandergreifen. Dadurch kann das Antriebsaggregat frühzeitig schlagartig verzögert werden, so daß sich die im weiteren Verzögerungsverlauf noch zu verzögernde Kraftfahrzeugmasse um die Masse des Antriebsaggregates reduziert.

Des weiteren ist in der DE 196 11 287 A1 die Abstützung eines Antriebsaggregates in einem Kraftfahrzeug mit einer deformierbaren Karosseriestruktur im Vorderwagen, in der das Antriebsaggregat elastisch gelagert ist, beschrieben. Dort sind sowohl der Motor als auch das Getriebe des Antriebsaggregates auf gegenüberliegenden Seiten durch wenigstens ein Zugband mit einem zugeordneten steifen Karosserieknotenpunkt verbunden, dergestalt, daß bei einem versetzten Frontalaufprall eine Drehung des Antriebsaggregates mit einer Verlagerung des Getriebes in Fahrzeugquerrichtung verhindert wird.

Aufgabe der Erfindung ist es, eine Anordnung eines Crashzugbandes nach dem Oberbegriff des Anspruchs 1 zu schaffen, mit der auf einfache Weise eine Deformation der Fahrgastzelle, insbesondere im Bereich des Fußraumes, bei einem versetzten Frontalaufprall reduziert wird.

Diese Aufgabe wird bei einer Anordnung eines Crashzugbandes nach dem Oberbegriff des Anspruchs 1 durch dessen kennzeichnende Merkmale gelöst. Bevorzugte Ausführungsformen sind in den Unteransprüchen beschrieben.

Die Erfindung besteht darin, daß bei der Anordnung eines Crashzugbandes (Zugbandes) an einer Längsträger aufweisenden deformierbaren Karosseriestruktur, bei der wenigstens am Längsträger der häufiger bei einem Frontalaufprall betroffenen Seite des Fahrzeugs ein solches Zugband befestigt ist - beispielsweise bei einem Fahrzeug mit Linkslenkung und Rechtsverkehr am linken Längsträger -, und dieses Zugband am Längsträger auf der weniger häufig betroffenen Seite - beispielsweise am rechten Längsträger - in Fahrzeuglängsrichtung erheblich vor seiner Befestigungsstelle am häufiger betroffenen Längsträger, gehaltert ist. Bei einem versetzten Frontalaufprall auf der linken Fahrzeugseite werden insbesondere die linke Vorderwagenstruktur und der linke Längsträger deformiert. Der rechte, gegenüberliegende Längsträger bleibt im wesentlichen unbelastet. Wird nun die Befestigungsstelle des Zugbandes an diesem linken Längsträger durch die Deformation desselben in Richtung der Fahrgastzelle mit Crashenergie beaufschlagt, wirkt das am anderen (rechten) und im wesentlichen durch den versetzten Frontalaufprall unbeeinrächtigt gebliebenen Längsträger gehalterte Zugband als ein um den Halterungspunkt schwenkbares Stützlager für den linken Längsträger. Der rechte Längsträger wird dabei durch das Zugband zur Energieaufnahme mit herangezogen und bei entsprechend hoher Aufprallenergie auch deformiert. Die durch diesen aufgenommene Energie steht dann aber für eine Deformation der Fahrgastzelle, insbesondere im Fußbodenbereich, nicht mehr zur Verfügung, wodurch diese Deformation reduziert ist und gegebenenfalls ganz unterbleibt. Die Anordnung eines derartigen Zugbandes, oder auch mehrerer Zugbänder, erhöht die Steifigkeit der Karosseriestruktur und ist in jeder Hinsicht nur wenig aufwendig.

Das Zugband ist bevorzugt im Motorraumbereich bzw. Vorderwagen anzuordnen, um die Deformationen möglichst in diesem Bereich zu halten und den Fußraumbereich zu verschonen. Dabei kann das Zugband unter dem Aggregat geführt sein und an diesem anliegen. Bei einer crashbedingten Zugbeanspruchung des Zugbandes nach dem vorbeschriebenen Wikmechanismus kann das Aggregat durch seine Masse und Halterung die Rückhaltewirkung des Zugbandes auf die Befestigungsstelle verstärken.

Zusätzlich zu diesem ersten Zugband kann ein zusätzliches, die Rückhaltewirkung auf einer Fahrzeugseite verstärkendes Zugband angeordnet sein. Dieses zusätzliche Zugband hat seine Befestigungsstelle an der A-Säule, vorzugsweise in Höhe der Armaturentafel, und ist schräg durch den Motorraum zu dem gegenüberliegenden und als Widerlager für das erste Zugband dienenden Längsträger geführt und ebenfalls an diesem gehaltert. Dabei können beide Zugbänder den gleichen Halterungspunkt am Längsträger haben. Dieses zusätzliche Zugband kann durch das Aggregat unterbrochen und in seinem mittleren Bereich durch dieses ersetzt sein, so daß auch bei diesem Zugband die Rückhaltewirkung durch die Masse und die Halterung des Aggregates verstärkt ist. Durch die Anordnung von zwei Zugbändern auf einer Fahrzeugseite wird die Gefahr einer Deformation der Fahrgastzelle weiter reduziert.

Das Zugband kann aber auch im Unterbodenbereich und zwar zwischen den stabilen Längsträgern, die mit dem Unterboden durch Punktschweißungen verbunden sind, angeordnet sein. Oder es kann zusätzlich zur Anordnung des Zugbandes im Vorderwagen ein zweites, die gleiche Karosserieseite verstärkende Zugband am Unterboden befestigt und gehaltert sein. Der Wirkmechanismus ist der gleiche wie bei dem im Vorderwagen angebrachten Zugband, mit dem Unterschied, daß die Rückhaltewirkung durch die Unterbodenstruktur verstärkt, dafür jedoch in einen Bereich nach hinten verlagert wird, der schon im vorderen Bereich der Fahrgastzelle und damit im Fußraumbereich liegt. Aus technologischen, insbesondere auch aus montagetechnischen Gründen ist es von Vorteil, wenn das Zugband in die Unterbodenverkleidung integriert ist und mit dieser montiert werden kann.

Die Erfindung wird nachstehend anhand von Ausführungsbeispielen näher erläutert. In den Zeichnungen zeigen schematisch:
- Fig. 1:: eine Fahrzeugkarosserie mit einem Crashzugband an der Vorderwagenstruktur in perspektivischer Darstellung,
- Fig. 2:: die Anordnung des Crashzugbandes in einer Seitenansicht,
- Fig. 3:: die Anordnung des Crashzugbandes in einer Draufsicht,
- Fig. 4:: die Fahrzeugkarosserie mit einem weiteren Crashzugband und
- Fig. 5:: eine weitere Ausführung einer Fahrzeugkarosserie mit zwei Crashzugbändern am Unterboden.

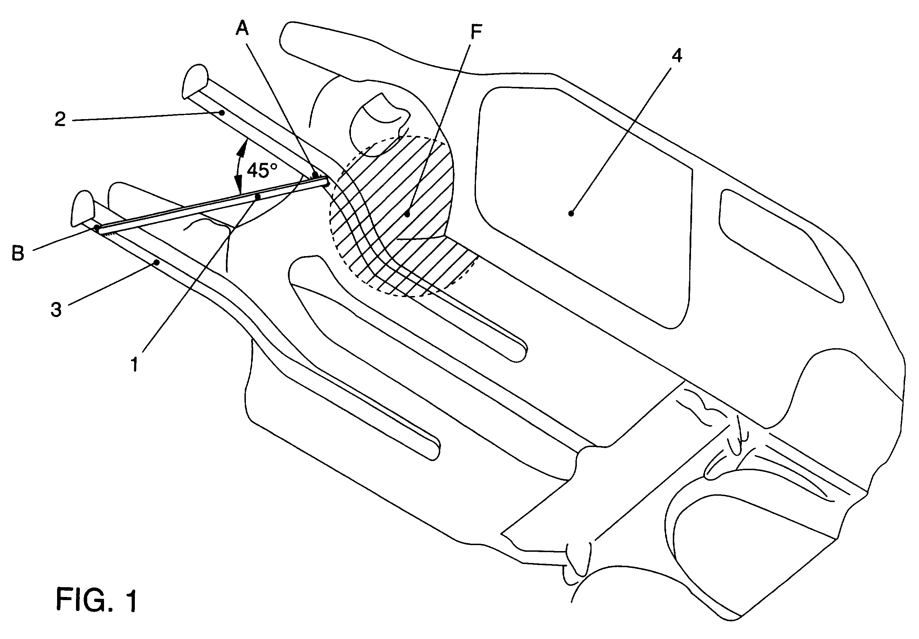

In Fig. 1 ist die prinzipielle Anordnung eines Crashzugbandes 1 aus Stahl an einer deformierbaren Karosseriestruktur mit zwei Längsträgern 2 und 3 im Vorderwagen (Motorraumbereich) eines Personenkraftwagens dargestellt. Das Crashzugband 1 ist am linken Längsträger 2 des Linkslenkerfahrzeugs bei A angeschweißt und im Winkel von 45° schräg nach vom zum gegenüberliegenden rechten Längsträger 3 geführt und mit diesem, ebenfalls durch eine Schweißverbindung, an einem Halterungspunkt B verbunden. In der Regel ist die linke Seite des PKW bei einem versetzten Frontalaufprall betroffen, und der dort befindliche Längsträger 2 und die mit diesem verbundene Karosseriestruktur, insbesondere im Trennwandbereich, wird deformiert und in Richtung der Fahrgastzelle 4 verschoben, wobei der Fußraum betroffen ist. Da jedoch in diesem Bereich das Crashzugband 1 am Längsträger 2 befestigt ist, wird dieses bei einem versetzten Frontalaufprall mit einem Teil der Crashenergie beaufschlagt und überträgt im wesentlichen diesen Teil auf den rechten Längsträger 3. Dadurch steht dieser Teil der Crashenergie nicht mehr für eine Deformation der Karosseriestruktur im Bereich des linken Längsträgers zur Verfügung, so daß die Gefahr einer Deformation der Fahrgastzelle im Fußraumbereich F verringert ist.

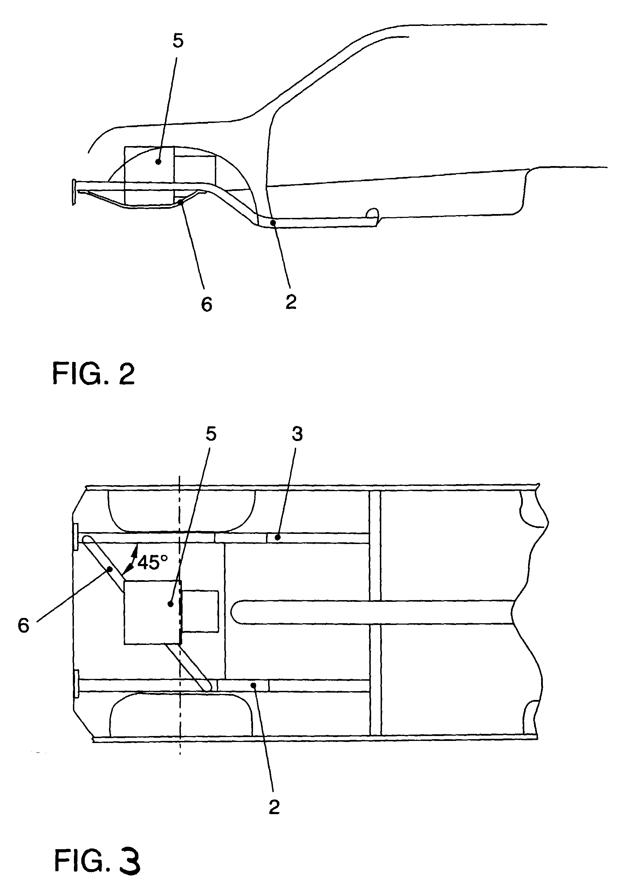

Die Fig. 2 und 3 zeigen eine Karosseriestruktur Anordnung mit im Anordnungsbereich des Crashzugbandes 6 befindlichem Aggregat 5. Das im Winkel von 45° zu den Längsträgern 2 und 3 geneigt zwischen diesen angeordnete Crashzugband 6 ist unter dem Aggregat, ohne mit diesem fest verbunden zu sein, hindurchgeführt und liegt an dessen Unterseite formschlüssig an.

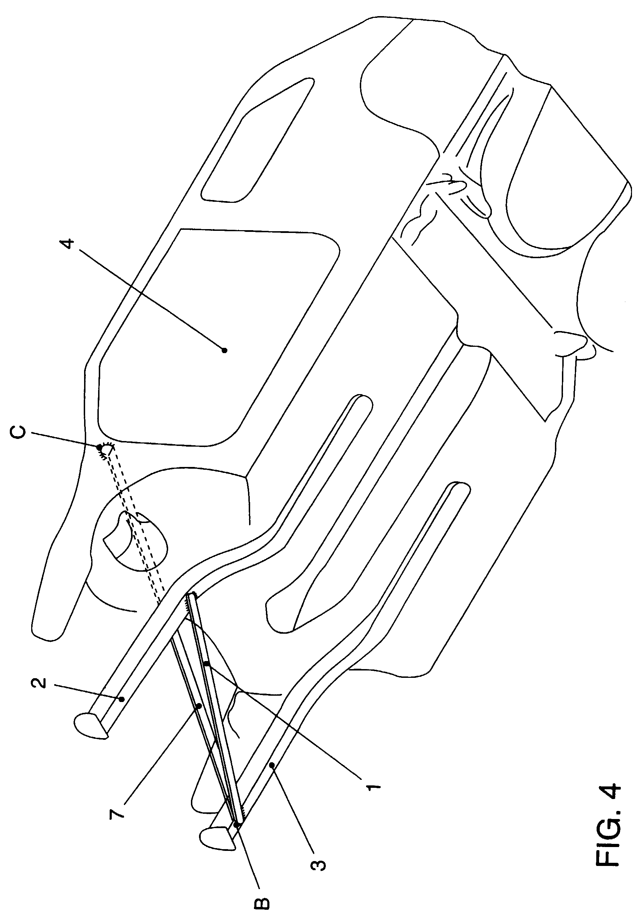

Eine weitere Ausführung ist in Fig. 4 gezeigt. Zusätzlich zu dem ersten Crashzugband 1 ist auf der linken Seite der Karosseriestruktur ein weiteres Crashzugband 7 aus Stahl angeordnet, das an der A-Säule bei C befestigt ist. Dieses Crashzugband hat sein Widerlager am rechten Längsträger 3 und ist am gleichen Halterungspunkt B wie das Crashzugband 1 befestigt. Das Crashzugband 7 ist in Fig. 4 geradlinig dargestellt. Es kann in Abhängigkeit von den Platzverhältnissen im Motorraum über dieses geführt oder geteilt und in letzteren Falle mit den einander zugewandten Enden der beiden Teilstücke am Aggregat befestigt sein.

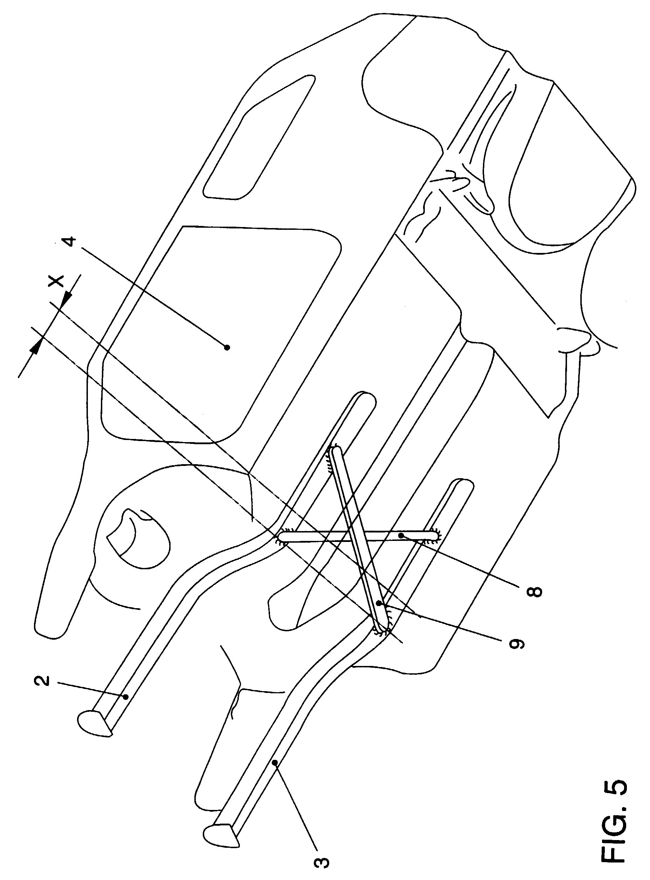

In Fig. 5 ist eine Ausführung mit zwei an den Längsträgem 2 und 3 im Unterbodenbereich der Karosseriestruktur angeordneten Crashzugbändern 8 und 9 gezeigt. Die Wirkung dieser Crashzugbänder 8 und 9 ist erst dann gegeben, wenn eine Deformation des Vorderwagens den Fußbodenbereich der Fahrgastzelle 4 mit erfaßt hat (Crashweg X zwischen 80 und 120 mm). Deshalb ist es zweckmäßig, diese Ausführung mit einer der vorstehend beschriebenen Ausführungen zu kombinieren.

Die Crashzugbänder 1, 6, 7, 8, und 9 haben einen Querschnitt von im wesentlichen 100 mm².

### BEZUGSZEICHENLISTE

- 1: Crashzugband
- 2: Längsträger
- 3: Längsträger
- 4: Fahrgastzelle
- 5: Aggregat
- 6: Crashzugband
- 7: Crashzugband
- 8: Crashzugband
- 9: Crashzugband
- A: Befestigungspunkt
- B: Befestigungspunkt
- C: Befestigungspunkt
- F: Fußraumbereich

## Patentansprüche

1. Anordnung eines Crashzugbandes an den Längsträgern eines Fahrzeugs zum Schutz der Fahrgastzelle bei einem versetzten Frontalaufprall, wobei die Längsträger mit einer deformierbaren Karosseriestruktur verbunden sind, bei der wenigstens am Längsträger der häufiger bei dem Frontalaufprall betroffenen Seite des Fahrzeugs ein Crashzugband befestigt ist, **dadurch gekennzeichnet,** daß das Crashzugband (1, 6, 9) am jeweils gegenüberliegenden Längsträger (3) und in Fahrzeuglängsrichtung erheblich vor der am Längsträger (2) der betroffenen Seite gegebenen Befestigungsstelle (A) bei (B) gehaltert ist.

2. Anordnung nach Anspruch 1, **dadurch gekennzeichnet,** daß das Crashzugband (1, 6) im Motorraumbereich oder/ und (Crashzugband 9) im Unterbodenbereich der Karosseriestruktur angeordnet ist.

3. Anordnung nach Anspruch 2, **dadurch gekennzeichnet,** daß das Crashzugband (9) in einer mit der Karosseriestruktur fest verbundenen Unterbodenverkleidung integriert ist.

4. Anordnung nach Anspruch 1 oder 2, **dadurch gekennzeichnet,** daß das Crashzugband (6) an der Unterseite des Aggregates geführt ist.

5. Anordnung nach Anspruch 1, **dadurch gekennzeichnet,** daß zusätzlich zu dem ersten Crashzugband (1, 6) auf der gleichen Seite der Karosseriestruktur ein weiteres Crashzugband (7) angeordnet ist, das seine Befestigungsstelle (C) an der A-Säule hat und das am gegenüberliegenden Längsträger (3) in Fahrzeuglängsrichtung erheblich vor der Befestigungsstelle (C gehaltert ist.

6. Anordnung nach Anspruch 5, **dadurch gekennzeichnet,** daß das weitere Crashzugband (7) den gleichen Halterungspunkt (B) wie das erste Crashzugband (1, 6) hat.

7. Anordnung nach Anspruch 4 oder 5, **dadurch gekennzeichnet,** daß das weitere Crashzugband (7) durch das Aggregat (5) unterbrochen und in seinem mittleren Bereich durch dieses ersetzt ist.

8. Anordnung nach einem oder mehreren der vorhergehenden Ansprüche, **dadurch gekennzeichnet,** daß die Zugbänder (1, 6, 7, 8, 9) aus einem hochfesten Material, vorzugsweise aus Stahl oder kohlenstofffaserverstärktem Kunststoff, bestehen.
